# EUROPÄISCHE PATENTSCHRIFT

(11) **EP 1 861 443 B1**
(45) Veröffentlichungstag und Bekanntmachung des Hinweises auf die Patenterteilung: **20.08.2008**
(21) Anmeldenummer: 06725072.0
(22) Anmeldetag: 15.03.2006
(51) Int. Cl.: C08G 2/10, C08J 11/02, C08L 59/00

(54) **VERFAHREN ZUR ENTFERNUNG VON RESTMONOMEREN AUS POLYOXYMETHYLENEN**
METHOD FOR REMOVING RESIDUAL MONOMERS FROM POLYOXYMETHYLENES
PROCEDE D'ELIMINATION DE MONOMERES RESIDUELS DANS DES POLYOXYMETHYLENES

(30) Priorität: 16.03.2005 DE 102005012480
(43) Veröffentlichungstag der Anmeldung: 05.12.2007
(73) Patentinhaber: BASF SE, 67056 Ludwigshafen (DE)
(72) Erfinder: ASSMANN, Jens, 68165 Mannheim (DE); ZÖLLNER, Knut, 68165 Mannheim (DE); BLINZLER, Marko, 68163 Mannheim (DE); URTEL, Melanie, 68535 Edingen-Neckarhausen (DE); SCHWITTAY, Claudius, 68165 Mannheim (DE)
(86) Internationale Anmeldenummer: PCT/EP2006/060749
(87) Internationale Veröffentlichungsnummer: WO 2006/097486

(56) Entgegenhaltungen:
- EP-A- 0 638 599
- EP-A- 1 259 557
- WO-A-20/05113623
- DE-A1- 3 231 797

## Beschreibung

Die Erfindung betrifft ein verbessertes Verfahren zur Entfernung von nicht umgesetzten Restmonomeren aus Polyoxymethylenhomo- oder -copolymeren, wobei man einen Entgasungsschritt in einem Strangentgaser durchführt.

Außerdem betrifft die Erfindung ein Verfahren zur Herstellung von Polyoxymethylenhomo- oder -copolymeren, dadurch gekennzeichnet, dass man zunächst in einer Monomeranlage geeignete Monomere hergestellt oder bevorratet, dann die Monomere in einem Polymerisationsreaktor zu den genannten Polymeren polymerisiert, und während oder nach dieser Polymerisation die in den Polymeren enthaltenen Restmonomeren nach dem obigen Verfahren entfernt.

Schließlich betrifft die Erfindung die Polyoxymethylenhomo- oder-copolymere, erhältlich nach dem letztgenannten Verfahren.

Polyoxymethylenpolymere (POM, auch Polyacetale genannt) werden durch Homooder Copolymerisation von 1,3,5-Trioxan (kurz: Trioxan), Formaldehyd oder einer anderen Formaldehydquelle erhalten. Dabei ist der Umsatz üblicherweise nicht vollständig, vielmehr enthält das POM-Rohpolymerisat noch bis zu 40 % nicht umgesetzter Monomere. Solche Restmonomere sind beispielsweise Trioxan und Formaldehyd, sowie ggf. mitverwendete Comonomere wie 1,3-Dioxolan, 1,3-Butandiolformal oder Ethylenoxid. POM steht hier zusammenfassend für Homo- und Copolymere.

Die Restmonomere werden durch Aufarbeitung mittels Entgasung aus dem Rohpoly meren entfernt. Gemäß dem Stand der Technik wird POM bei Atmosphärendruck oder Unterdruck entgast:

Die EP-A 638 599 beschreibt ein Verfahren zur Herstellung von Polyacetalen, bei dem die Restmonomere in einem Entgasungsteil durch Druckabsenkung verdampft werden: in den Beispielen wird über ein Drosselventil auf Atmosphärendruck verdampft (Seite 4, Zeilen 22 und 43).

In der EP-A 999 224 wird die Herstellung von Polyacetal-Copolymeren beschrieben, wobei die nicht umgesetzten Monomere durch "reduced pressure" entfernt und in einem Wasserkreislauf absorbiert werden (Seite 3, Zeilen 8 und 49 sowie Seite 4, Zeile 23). Genauere Angaben zu Druck und Temperatur der Restmonomerabtrennung werden nicht gemacht.

Die DE-A 31 47 309 offenbart die Herstellung von Oxymethylenpolymeren, bei der in einem Entgasungs- und Konfektionierreaktor die nicht umgesetzten Monomere durch Entspannen auf Normaldruck oder durch Anlegen von Vakuum - im Beispiel 0,01 bar - entfernt werden (Seite 6, Zeile 21 und Seite 7, Zeile 23).

Aus der Monographie "Entgasen beim Herstellen und Aufbereiten von Kunststoffen", Hg. Verein Deutscher Ingenieure, VDI-Verlag Düsseldorf 1992 von F. Streiff ist das Prinzip eines Strangentgasers bekannt. Einzelne Polymere wie POM oder konkrete Druck- und Temperaturbereiche werden nicht genannt.

In der jüngeren Anmeldung DE 102 005 002 413.0 wurden Entgasungsmethoden unter Überdruck vorgeschlagen.

Die Restmonomerabtrennung nach dem Stand der Technik hat u.a. folgende Nachteile:
- die Schmelze schäumt z.B. bei großen Drucksprüngen in unerwünschter Weise auf, was die weitere Handhabung z.B. bei der Additivierung oder Konfektionierung, erschwert,
- die abgetrennten Restmonomeren können in die POM-Herstellung zurückgeführt werden, müssen dazu jedoch in aufwändiger Weise in einem Zwischenverdichter verdichtet werden oder mit Hilfe von Lösungsmitteln, beispielsweise Wasser, aufgearbeitet werden,
- die abgetrennten Restmonomeren müssen vor Ihrer Wiederverwendung aufwändig vom verwendeten Desaktivator (Abbruchmittel) oder anderen Fremdstoffen befreit werden,
- die Verweilzeit des POM in den Entgasungsvorrichtungen ist recht lang. Dadurch wird das Polymer thermisch belastet, was unerwünschte Abbaureaktionen begünstigt und zu nachteiligen Verfärbungen des Materials führen kann.
- Die Entgasung von Polymeren in einem Stangentgaser führt ebenso zu langen Verweilzeiten und den bereits geschilderten Nachteilen bei der Produktqualität.
- Der Restgehalt an Formaldehyd im POM ist noch zu hoch.

Es bestand die Aufgabe, den geschilderten Nachteilen abzuhelfen. Insbesondere sollte ein Verfahren zur Restmonomerabtrennung aus POM bereitgestellt werden, bei dem ein Aufschäumen des POM vermieden wird. Außerdem sollte eine Rückführung der abgetrennten Restmonomeren ohne Zwischenverdichtung bzw. Aufarbeitung und ohne Abtrennung der Desaktivatoren ermöglicht werden. Die Verweilzeit des POM in der Entgasungsvorrichtung sollte kürzer sein als in den bekannten Verfahren. Der Formaldehydgehalt und der Anteil an Restmonomeren und Fremdstoffen sollte weiter minimiert werden.

Demgemäß wurde das eingangs definierte Verfahren zur Entfernung der Restmonomeren gefunden. Bevorzugte Aüsführungsförmen der Erfindung sind den Unteransprüchen zu entnehmen.

Alle Druckangaben sind Absolutdrucke, sofern nicht anders angegeben.

Die Polyoxymethylenhomo- oder -copolymere (POM), aus denen mit dem erfindungsgemäßen Verfahren die nicht umgesetzten Restmonomere entfernt werden, sind als solche bekannt und handelsüblich. Die Homopolymere werden durch Polymerisation von Formaldehyd oder - bevorzugt - Trioxan hergestellt; bei der Herstellung der Copolymere werden außerdem Comonomere mitverwendet.

Ganz allgemein weisen derartige POM-Polymere mindestens 50 mol-% an wiederkehrenden Einhelten - CH₂O in der Polymerhauptkette auf. Polyoxymethylencopolymere sind bevorzugt, insbesondere solche, die neben den wiederkehrenden Einheiten -CH₂O- noch bis zu 50, vorzugsweise 0,01 bis 20, insbesondere 0,1 bis 10 mol-% und ganz besonders bevorzugt 0,5 bis 6 mol% an wiederkehrenden Einheiten enthalten 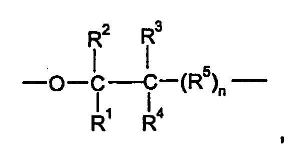 wobei R¹ bis R⁴ unabhängig voneinander ein Wasserstoffatom, eine C₁-bis C₄-Alkylgruppe oder eine halogensubstituierte Alkylgruppe mit 1 bis 4 C-Atomen und R⁵ eine -CH₂-, -CH₂O -, eine C₁- bis C₄-Alkyl- oder C₁- bis C₄-Haloalkyl substituierte Methylengruppe oder eine entsprechende Oxymethylengruppe darstellen und n einen Wert im Bereich von 0 bis 3 hat. Vorteilhafterweise können diese Gruppen durch Ringöffnung von cyclischen Ethern in die Copolymere eingeführt werden. Bevorzugte cyclische Ether sind solche der Formel 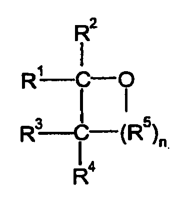 wobei R¹ bis R⁵ und n die oben genannte Bedeutung haben. Nur beispielsweise seien Ethylenoxid, 1,2-Propylenoxid, 1,2-Butylenoxid, 1,3-Butylenoxid, 1,3-Dioxan, 1,3-Dioxolan und 1,3-Dioxepan (= Butandiolformal, BUFO) als cyclische Ether genannt sowie lineare Oligo- oder Polyformale wie Polydioxolan oder Polydioxepan als Comonomere genannt.

Ebenfalls geeignet sind Oxymethylenterpolymerisate, die beispielsweise durch Umsetzung von Trioxan und einem der vorstehend beschriebenen cyclischen Ether mit einem dritten Monomeren, vorzugsweise bifunktionellen Verbindungen der Formel 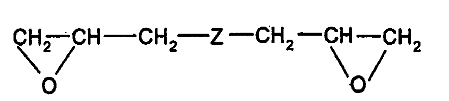 und/oder 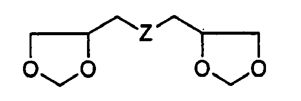 Wobei Z eine chemische Bindung, -O-, -ORO- (R C₁- bis C₈-Alkylen oder C₃- bis C₈-Cycloalkylen) ist, hergestellt werden.

Bevorzugte Monomere dieser Art sind Ethylendiglycid, Diglycidylether und Diether aus Glycidylen und Formaldehyd, Dioxan oder Trioxan im Molverhältnis 2:1 sowie Diether aus 2 mol Glycidylverbindung und 1 mol eines aliphatischen Diols mit 2 bis 8 C-Atomen wie beispielsweise die Diglycidylether von Ethylenglykol, 1,4-Butandiol, 1,3-Butandiol, Cyclobutan-1,3-diol, 1,2-Propandiol und Cyclohexan-1,4-diol, um nur einige Beispiele zu nennen.

Endgruppenstabilisierte Polyoxymethylenpolymerisate, die an den Kettenenden überwiegend GC-oder -O-CH₃-Bindungen aufweisen, werden besonders bevorzugt.

Die bevorzugten Polyoxymethylencopolymere haben Schmelzpunkte von mindestens 150°C und Molekulargewichte (Gewichtsmittelwert) M_{w} im Bereich von 5.000 bis 300.000, vorzugsweise von 7.000 bis 250.000 g/mol. Insbesondere bevorzugt sind POM-Copolymerisate mit einer Uneinheitlichkeit (M_{w}/Mₙ) von 2 bis 15, bevorzugt von 2,5 bis 12, besonders bevorzugt 3 bis 9. Die Messungen erfolgen in der Regel über Gelpermeationschromatographie (GPC) ≙ SEC (size exclusion chromatography), der Mₙ-Wert (Zahlenmittel des Molekulargewichtes) wird im allgemeinen bestimmt mittels GPC/SEC.

Die Molekulargewichte des Polymeren können gegebenenfalls durch die bei der Trioxanpolymerisation üblichen Regler sowie durch die Reaktionstemperatur und -verweilzeit auf die angestrebten Werte eingestellt werden. Als Regler kommen Acetale bzw. Formale einwertiger Alkohole, die Alkohole selbst sowie die als Kettenüberträger fungierenden geringen Mengen Wasser, deren Anwesenheit sich in der Regel nie vollständig vermeiden lässt, in Frage. Die Regler werden in Mengen von 10 bis 10.000 ppm, vorzugsweise von 20 bis 5.000 ppm, eingesetzt.

Als Initiatoren (auch als Katalysatoren bezeichnet) werden die bei der Trioxanpolymerisation üblichen kationischen Starter verwendet. Es eignen sich Protonensäuren, wie fluorierte oder chlorierte Alkyl- und Arylsulfonsäuren, z.B. Perchlorsäure, Trifluormethansulfonsäure oder Lewis-Säuren, wie z.B. Zinntetrachlorid, Arsenpentafluorid, Phosphorsäurepentafluorid und Bortrifluorid sowie deren Komplexverbindungen und salzartige Verbindungen, z.B. Bortrifluorid-Etherate und Triphenylmethylenhexafluorophosphat. Die Initiatoren (Katalysatoren) werden in Mengen von etwa 0,01 bis 1.000 ppm, vorzugsweise 0,01 bis 500 ppm und insbesondere von 0,01 bis 200 ppm eingesetzt. Im allgemeinen empfiehlt es sich, den Initiator in verdünnter Form zuzusetzen, vorzugsweise in Konzentrationen von 0,005 bis 5 Gew.%. Als Lösungsmittel hierfür können inerte Verbindungen wie aliphatische, cycloaliphatische Kohlenwasserstoffe z.B. Cyclohexan, halogenierte aliphatische Kohlenwasserstoffe, Glykolether usw. verwendet werden. Besonders bevorzugt ist Triglyme (Triethylenglykoldimethylether) als Lösungsmittel sowie 1,4-Dioxän oder zyklische Carbonate wie Propylencarbonat oder Lactone wie γ-Butyrolacton.

Zusätzlich zu den Initiatoren können Cokatalysatoren mitverwendet werden. Die sind Alkohole jeglicher Art, z.B. aliphatische Alkohole mit 2 bis 20 C-Atomen, wie t-Amylalkohol, Methanol, Ethanol, Propanol, Butanol, Pentanol, Hexanol; aromatische Alkohole mit 2 bis 30 C-Atomen, wie Hydrochinon; halogenierte Alkohole mit 2 bis 20 C-Atomen, wie Hexafluorisopropanol; ganz besonders bevorzugt sind Glykole jeder Art, insbesondere Diethylenglykol und Triethylenglykol; und aliphatische Dihydroxyverbindungen, insbesondere Diole mit 2 bis 6 Kohlenstoffatomen wie 1,2-Ethandiol, 1,3-Propandiol, 1,4-Butandiol, 1,6-Hexandiol, 1,4-Hexandiol, 1,4-Cyclohexandiol, 1,4-Cyclohexandimethanol und Neopentylglykol.

Monomere, Initiatoren, Cokatalysator und gegebenenfalls Regler können auf beliebige Weise vorgemischt oder auch getrennt voneinander dem Polymerisationsreaktor zugegeben werden.

Ferner können die Komponenten zur Stabilisierung sterische gehinderte Phenole enthalten wie in EP-A 129369 oder EP-A 128739 beschrieben.

Vorzugsweise wird direkt anschließend an die Polymerisation die Polymerisationsmischung desaktiviert, vorzugsweise ohne dass eine Phasenveränderung erfolgt. Die Desaktivierung der Initiatorreste (Katalysatorreste) erfolgt in der Regel durch Zugabe von Desaktivatoren (Abbruchmitteln) zur Polymerisationsschmelze. Geeignete Desaktivatoren sind z.B. Ammoniak sowie primäre, sekundäre oder tertiäre, aliphatische und aromatische Amine, z.B. Trialkylamine wie Triethylamin, oder Triacetondiamin. Außerdem geeignet sind basisch reagierende Salze, wie Soda und Borax, weiterhin die Carbonate und Hydroxide der Alkali- und Erdalkalimetalle, außerdem auch Alkoholate wie Natriumethanolat. Die Desaktivatoren werden üblicherweise den Polymeren in Mengen von vorzugsweise 0,01 ppmw (parts per million by weight) bis zu 2 Gew.% zugesetzt. Weiterhin sind Alkali- bzw. Erdalkalialkyle als Desaktivatoren bevorzugt, welche 2 bis 30 C-Atome im Alkylrest aufweisen. Als besonders bevorzugte Metalle seien Li, Mg und Na genannt, wobei n-Butyllithium besonders bevorzugt ist.

Die Abbruchmittel werden üblicherweise in organischen Lösungsmitteln dosiert. Bei RT festen Abbruchmittein erfolgt die Dosierung beispielsweise über Seitenextruder in einer POM-Schmelze.

POM aus Formaldehyd ist in üblicher Weise durch Polymerisation in der Gasphase, in Lösung, durch Fällungspolymerisation oder in Masse (Substanz) herstellbar. POM aus Trioxan wird in der Regel durch Polymerisation in Masse erhalten, wozu man jegliche Reaktoren mit hoher Mischwirkung verwenden kann. Die Reaktionsführung kann dabei homogen erfolgen, z.B. in einer Schmelze, oder heterogen, z.B. als Polymerisation zu einem Feststoff oder Feststoffgranulat. Geeignet sind beispielsweise Schalenreaktoren, Pflugscharmischer, Rohrreaktoren, Listreaktoren, Kneter (z.B. Busskneter), Extruder mit beispielsweise einer oder zwei Schnecken, und Rührreaktoren, wobei die Reaktoren statische oder dynamische Mischer aufweisen können.

Bei einer Polymerisation in Masse, z.B. in einem Extruder, wird üblicherweise mit einem aufgeschmolzenen Polymer eine sog. Schmelzeabdichtung erreicht, wodurch flüchtige Bestandteile im Extruder verbleiben. Man dosiert die vorstehenden Monomere in die im Extruder vorhandene Polymerschmelze, gemeinsam oder getrennt von den Initiatoren (Katalysatoren), bei einer bevorzugten Temperatur der Reaktionsmischung von 62 bis 114°C. Bevorzugt werden auch die Monomere (Trioxan) in geschmolzenem Zustand dosiert, z.B. bei 60 bis 120°C.

Die Schmelzepolymerisation erfolgt in der Regel bei 1,5 bis 500 bar und 130 bis 300°C, und die Verweilzeit der Polymerisationsmischung im Reaktor beträgt üblicherweise 0,1 bis 20 min, bevorzugt 0,4 bis 5 min. Vorzugsweise führt man die Polymerisation bis zu einem Umsatz über 30 %, z.B. 60 bis 90 %.

Man erhält in jedem Falle ein Roh-POM, das wie erwähnt erhebliche Anteile, beispielsweise bis zu 40 %, an nicht umgesetzten Restmonomeren enthält, insbesondere Trioxan und Formaldeyhd. Dabei kann Formaldehyd im Roh-POM auch dann vorliegen, wenn nur Trioxan als Monomer eingesetzt wurde, da es als Abbauprodukt des Trioxans und des POM entstehen kann. Außerdem können auch andere Oligomere des Formaldehyds vorliegen, z.B. das Tetramere Tetroxan.

Bevorzugt wird zur Herstellung des POM Trioxan als Monomer eingesetzt, weshalb auch die abgezogenen Restmonomere Trioxan enthalten, außerdem üblicherweise noch 0,5 bis 10 Gew.% Tetroxan und 0,1 bis 75 Gew.% Formaldehyd.

Das erfindungsgemäße Verfahren kann diskontinuierlich oder bevorzugt kontinuierlich betrieben werden.

Vorzugsweise sollte die Schmelze bei Eintritt in den Startgentgaser noch maximal 5.000 ppm, bevorzugt max. 3.000 ppm und insbesondere max. 2.000 ppm flüchtige substanzen enthalten, da die Verweilzeit nicht zu lang sein sollte und die Gefahr von Strang abrissen zu groß wird.

Entsprechend ist eine Verfahrensweise besonders bevorzugt, welche folgende Schritte umfasst:
a) das Polymer wird bei einem Druck von 10 bis 100 bar auf eine Temperatur von 165 bis 270°C gebracht, wobei eine Schmelze entsteht,
b) die Schmelze wird bei einem Druck von 1 mbar bis 9 bar und einer Temperatur von 160 bis 240°C in mindestens einer Entgasungsvorrichtung entgast und
c) danach in einem Stangentgaser weitere Restmonomere entfernt.

Der Schritt b) kann sowohl bei Unterdruck als auch bei Überdruck durchgeführt werden, jedoch ist ein o.g. Arbeiten unter Unterdruck vor dem Strangentgaser bevorzugt.

In Schritt a) des erfindungsgemäßen Verfahrens wird das Polymer (POM) bei einem Druck von 10 bis 100 bar auf eine Temperatur von 165 bis 270°C gebracht, wobei eine Schmelze entsteht.

Sofern das POM am Ende des Polymerisationsreaktors bzw. der Desaktivierung unter diesen Druck- und Temperaturbedingungen vorliegt, sind die Merkmale von Schritt a) bereits erfüllt. Ansonsten wird das POM durch übliche Maßnahmen zur Druck- und Temperatureinstellung auf einen Druck von 10 bis 100 bar und auf eine Temperatur von 165 bis 270°C gebracht. Üblicherweise liegt die Temperatur des POM vor Schritt a) unter der in Schritt a) einzustellenden Temperatur, d.h. das Polymer wird in Schritt a) aufgeheizt. Dieses Aufheizen wird auch als Überhitzung bezeichnet.

Jedoch kann die POM-Temperatur- insbesondere bei der POM-Herstellung durch Schmelzepolymerisation - vor Schritt a) auch über der in Schritt a) einzustellenden Temperatur liegen; in diesem Fall wird das Polymer in Schritt a) abgekühlt.

Bevorzugt beträgt in Schritt a) der Druck 15 bis 60 bar, besonders bevorzugt 17 bis 50 bar.

Ebenfalls bevorzugt beträgt in Schritt a) die Temperatur 170 bis 240°C, besonders bevorzugt 180 bis 220°C.

Insbesondere werden die genannten Bereiche kombiniert, d.h. bevorzugt beträgt in Schritt a) der Druck 15 bis 60 bar und die Temperatur 170 bis 240°C; und besonders bevorzugt beträgt der Druck 17 bis 50 bar und die Temperatur 180 bis 220°C.

Die Verweilzeit des Polymeren in Schritt a) beträgt in der Regel 10 sec bis 30 min, bevorzugt 20 sec bis 15 min.

Die Temperierung des Polymeren in Schritt a) erfolgt in üblicher Weise durch Wärmetauscher, Doppelmantelbeheizung (bzw. -kühlüng), temperierte statische Mischer, innenliegende Wärmetauscher oder andere geeignete Vorrichtungen. Die Einstellung des Drucks nimmt man ebenfalls in an sich bekannter Weise vor, z.B. mittels Druckregelventilen oder Pumpen.

Man kann das bei der POM-Herstellung erhaltene Roh-POM zunächst abkühlen lassen und dann in Schritt a) aufheizen.

Energetisch günstiger ist es jedoch, das noch heiße Roh-POM unmittelbar nach der Polymerisation bzw. Desaktivierung auf den genannten Druck und die genannte Temperatur zu bringen. In dieser - bevorzugten - Ausführungsform folgt demnach Schritt a) unmittelbar auf die Polymerisation bzw. Desaktivierung. Apparativ lässt sich dies in einfacher Weise dadurch bewerkstelligen, dass auf die Polymerisationszone bzw. Desaktivierungszone des Reaktors unmittelbar eine Temperierungszone (z.B. Überhitzungszone) folgt, welche die Temperatur von Schritt a) einstellt. Diese Temperierungszone kann beispielsweise als Wärmetauscher ausgestaltet sein. Der Druck von Schritt a) wird bevorzugt durch die Reaktorgeometrie und die Reaktiorisbedingungen der POM-Herstellung eingestellt.

Druck und Temperatur von Schritt a) sind in jedem Fall derart einzustellen, dass das Polymer als Schmelze vorliegt. Dabei soll der Begriff Schmelze nicht ausschließen, dass das Polymer geringe Mengen Feststoffe enthält, beispielsweise maximal 5 Gew.-%.

In Schritt b) des erfindungsgemäßen Verfahrens wird die in Schritt a) erhaltene Schmelze bei einem Druck von 1 mbar bis 9 bar und einer Temperatur von 160 bis 240°C in mindestens einer Entgasungsvorrichtung entgast. Die Entgasung kann folglich ― im Unterschied zu den Verfahren des Standes der Technik - auch unter Überdruck stattfinden.

In Schritt b) liegen Druck und Temperatur üblicherweise niedriger als in Schritt a); dies wird nachfolgend auch als Drucksprung bzw. Temperatursprung bezeichnet. Die Bedingungen sind in Schritt b) derart zu wählen, dass das POM als Schmelze entgast wird. Bei einer mehrstufigen Entgasung kann auch eine oder mehrere der Entgasungstemperaturen oberhalb der Temperatur von Schritt a) liegen.

Bevorzugt beträgt in Schritt b) der Druck 5 mbar bis 8 bar, besonders bevorzugt 10 mbar bis 7 bar.

Ebenfalls bevorzugt beträgt in Schritt b) die Temperatur 168 bis 220°C, besonders bevorzugt 170 bis 210°C.

Insbesondere werden die genannten Bereiche kombiniert, d.h. bevorzugt beträgt in Schritt b) der Druck 5 mbar bis 8 bar und die Temperatur 168 bis 220°C; und besonders bevorzugt beträgt der Druck 10 mbar bis 7 bar und die Temperatur 170 bis 210°C.

In einer bevorzugten Ausführungsform liegt der Druck in Schritt b) um 5 bis 50 bar, insbesondere 10 bis 25 bar unter dem Druck in Schritt a). Ebenfalls bevorzugt liegt die Temperatur in Schritt b) um 5 bis 50°C, insbesondere 10 bis 40°C unter der Temperatur von Schritt a).

Die Verweilzeit des Polymeren in Schritt b) beträgt in der Regel 1 sec bis 15 min, bevorzugt 5 sec bis 3 min. Bei einer mehrstufigen Entgasung (siehe weiter unten) beziehen sich diese Zeiten auf jeweils eine einzige Stufe. Zusätzliche Verweilzeit kann durch verbindende Rohrleitungen eingebracht werden. Um Schädigungen des Polymers infolge thermischer Belastungen zu minimieren, beträgt diese zusätzliche Verweilzeit durch verbindende Rohrleitungen bevorzugt maximal 30 min.

Die Temperierung des Polymeren in Schritt b) erfolgt in üblicher Weise durch Wärmetauscher, Doppelmantel, temperierte statische Mischer, innenliegende Wärmetauscher oder andere geeignete Vorrichtungen. Die Einstellung des Drucks nimmt man ebenfalls in an sich bekannter Weise vor, z.B. mittels Druckregelventilen. Der Drucksprung kann auch durch Stopf- oder Quetschrohre oder Querschnittsverengung mit anschließender Wiederaufweitung erzielt werden.

Als Entgasungsvorrichtungen eignen sich Entgasungstöpfe (Flash-Töpfe), Entgasungsextruder mit einer oder mehreren Schnecken, Filmtruder, Dünnschichtverdampfer, Sprühtrockner und andere übliche Entgasungsvorrichtungen. Bevorzugt verwendet man Entgasungsextruder oder Entgasungstöpfe. Letztere sind besonders bevorzugt.

Die Entgasung in Schritt b) kann einstufig (in einer einzigen Entgasungsvorrichtung) erfolgen. Ebenso kann sie mehrstufig - beispielsweise zweistufig - in mehreren Entgasungsvorrichtungen erfolgen, die hintereinander und/oder parallel angeordnet sind. Bevorzugt ist die hintereinandergeschaltete Anordnung.

Bei der mehrstufigen Entgasung können die Entgasungsvorrichtungen in Art und Größe gleich oder verschieden sein. Beispielsweise kann man zwei gleiche Entgasungstöpfe hintereinander betreiben, oder zwei verschieden dimensionierte Entgasungstöpfe hintereinander, oder zwei gleiche Entgasungsextruder, oder zwei verschieden dimensionierte Entgasungsextruder, oder einen Entgasungstopf und dahinter einen Entgasungsextruder, oder einen Entgasungsextruder und dahinter einen Entgasungstopf. Die Variante mit zwei (gleichen oder verschiedenen) Entgasungstöpfen ist bevorzugt. Besonders bevorzugt verwendet man zwei verschiedene Entgäsungstöpfe hintereinander, wobei der zweite Topf ein kleineres Volumen aufweist.

Bei einer zweistufigen Entgasung unter Überdruck beträgt der Druck in der ersten Stufe bevorzugt 2 bis 18, insbesondere 3 bis 15 und besonders bevorzugt 4 bis 10 bar, und in der zweiten Stufe bevorzugt 1,05 bis 4, insbesondere 1,05 bis 3,5 und besonders bevorzugt 1,05 bis 3 bar.

Die Temperatur unterscheidet sich bei einer zweistufigen Entgasung in der Regel nicht wesentlich von vorstehend für Schritt b) bereits genannten Temperaturen.

In einer besonders bevorzugten Ausführungsform ist das erfindungsgemäße Verfahren dadurch gekennzeichnet, dass bei der zweistufigen Entgasung b) in der ersten Stufe der Druck 2 bis 18 bar und die Temperatur 160 bis 240°C, und in der zweiten Stufe der Druck 1,05 bis 4 bar und die Temperatur 160 bis 240°C beträgt.

Vor Eintritt in den Strangentgaser wird mindestens ein Entgasungsschritt bei Unterdruck durchgeführt.

Verweilzeiten und Temperaturprofile entsprechen hierbei den oben stehenden Angaben für Schritt b). Der Druck beträgt in der Regel von 1 mbar bis 1 bar, vorzugsweise von 5 mbar bis 500 mbar und insbesondere von 10 mbar bis 250 mbar.

Es versteht sich von selbst, dass auch dieser Entgasungsschritt in mehrere Stufen auf teilbar ist.

Die bei der Entgasung frei werdenden Restmonomere werden als Brüdenstrom abgetrennt. Unabhängig von der Ausgestaltung der Entgasung (ein- oder mehrstufig, Entgasungstöpfe oder-extruder, etc.) sind die Restmonomere üblicherweise ausgewählt aus Trioxan, Formaldehyd, Tetroxan, 1,3-Dioxolan, 1,3-Dioxepan, Ethylenoxid und Oligomeren des Formaldehyds.

Die mit dem erfindungsgemäßen Verfahren abgetrennten Restmonomere (Brüdenström) werden in üblicher Weise abgezogen. Sie können kondensiert oder in Monomeren ad- oder absorbiert werden und in die Polymerisation zurückgeführt werden.

Das Mengenverhältnis von Trioxan und Formaldehyd im Brüdenstrom kann durch Einstellung entsprechender Drucke und Temperaturen variiert werden. Je höher der Druck ist, umso größer ist der Formaldehydanteil im Brüdenstrom.

Da die bevorzugte Entgasung erfindungsgemäß - egal ob ein- oder mehrstufig - mindestens teilweise unter Überdruck stattfindet, können Betriebsbedingungen (u.a. Druck und Temperatur) eingestellt werden, bei denen der Brüdenstrom ohne apparativ aufwändige vorherige Zwischenverdichtung kondensiert werden kann. Jedoch versteht sich, dass der Brüdenstrom auch einem zusätzlichen Verdichtungsschritt unterworfen werden kann.

Durch den hohen Druck in Schritt b) kann dort die Temperatur niedriger gehalten werden, was die thermische Belastung des POM in vorteilhafter Weise vermindert.

Das entgaste POM wird in der Regel mit üblichen Fördervorrichtungen aus der Entgasungsvorrichtung entfernt. Solche Vorrichtungen sind beispielsweise Schmelzepumpen, insbesondere Zahnradpumpen.

Als Produkt des erfindungsgemäßen Verfahrens wird ein entgastes, restmonomerenarmes POM erhalten. In der Regel beträgt der Restmonomergehalt des POM 0,01 ppm bis 1 %, bevorzugt 0,1 ppm bis 0,1 % und besonders bevorzugt 0,5 ppm bis 100 ppm.

In Schritt c) des bevorzugten Verfahrens gelangt die Schmelze mit einem Durchsatz von 100 bis 700 g/h, bevorzugt 200 bis 500 g/h pro Loch auf die Düsenplatte (Verteilerplatte) des Strangentgasers.

Die Viskosität der Schmelze beträgt vorzugsweise gemessen als MVR von 2 bis 50 g/10 Min (190°C; 2,16 kg Belastung), vorzugsweise von 3 bis 35 g/10 Min gemäß ISO 1133.

Der Lochdurchmesser beträgt in der Regel 3 bis 8 mm, bevorzugt 4 bis 6 mm, die Falllänge 1 bis 10 m, bevorzugt 1 bis 3 m, wobei die letzte Größe von der produzierten Menge sehr stark abhängig ist.

Insbesondere wird der Stangentgaser mit minimalem Stand auf der Düsenplatte als auch im Austragskonus betrieben (s. auch "Entgasen beim Herstellen und Aufbereiten von Kunststoffen" VDI Verlag Düsseldorf 1992, S. 53-63).

Der Druck im Stangentgaser beträgt vorzugsweise 0,1 bis 250 mbar, bevorzugt 1 bis 50 mbar und insbesondere 2 bis 20 mbar.

Die Temperatur beträgt vorzugsweise bei Eintritt der Schmelze in den Stangentgaser von 155 bis 270°C, vorzugsweise 160 bis 240°C und insbesondere 165 bis 220°C, vorzugsweise weist die Temperatur im Austragskonus die gleichen Werte auf.

Die Verweilzeit beträgt vorzugsweise 2 sec bis 60 min, insbesondere 5 sec bis 20 min und insbesondere 10 sec bis 5 min.

Das erfindungsgemäße Verfahren hat u.a. folgende Vorteile:

Aufgrund der gestuften mit Überdruck beginnenden Entgasung verbessert sich das Fließverhalten des Polymers in den Entgasungsvorrichtungen. Insbesondere schäumt es nicht auf, wodurch sich die weitere Handhabung, z.B. bei der Zugabe von Additiven oder der Konfektionierung, deutlich erleichtert.

Bei der Entgasung im Vakuum gemäß dem Stand der Technik ist eine gewisse Mindestfüllstandshöhe in der Entgasungsvorrichtung erforderlich. Durch den Füllstand wird Druck auf die Zahnräder der Schmelzepumpe erzeugt, die in die Polymerschmelze greifen und diese fördern. Ein hoher Füllstand bedeutet allerdings eine lange mittlere Verweilzeit des Polymeren.

Hingegen wurde gefunden, dass die erfindungsgemäße Entgasung unter Überdruck keinen Mindestfüllstand in der Entgasungsvorrichtung erfordert. Vielmehr kann sie auch ohne Füllstand betrieben werden. Dadurch verkürzt sich die mittlere Verweilzeit des Polymers und verengt sich die Verweilzeitverteilung des Polymers in der Entgasungsvorrichtung erheblich; die thermische Belastung des POM ist wesentlich geringer. Unerwünschte Verfärbungen werden auf diese Weise minimiert. Demnach ist ein weiterer Vorteil des erfindungsgemäßen Verfahrens die Produktschonung.

Unter den erfindungsgemäßen Bedingungen siedet der bei der Desaktivierung zugefügte Desaktivator nicht und geht daher nicht oder nur in sehr geringem Ausmaß in die Restmonomere (Brüdenstrom) über. Vielmehr verbleibt der überschüssige, nicht chemisch gebundene Desaktivator ganz überwiegend in der entgasten POM-Schmelze. Dadurch entfällt die aufwändige Entfernung des Desaktivators aus dem Brüdenstrom, die ansonsten erforderlich wäre, wenn der Brüdenstrom in der Polymerisation wiederverwendet werden soll. Diese eingesparte Abtrennung des Desaktivators aus den Restmonomeren verbessert die Wirtschaftlichkeit des erfindungsgemäßen Verfahrens.

Die erfindungsgemäße Entgasung unter Überdruck hat den weiteren Vorteil, dass das Eindringen von Umgebungsluft bzw. Sauerstoff in die Entgasungsvorrichtung vermieden wird. POM zersetzt sich in inerter Atmosphäre bei Temperaturen ab ca. 260°C, in sauerstoffhaltiger Atmosphäre jedoch bereits ab 160°C, weshalb bei der Unterdruck-Entgasung gemäß dem Stand der Technik auch kleinste Leckagen der Entgasungsvorrichtung vermieden werden sollten. Im Gegensatz dazu ist die hier gefundene Überdruck-Entgasung leckagetolerant.

Falls erforderlich, können die Restmonomeren von sonstigen Verunreinigungen befreit werden. Dies kann in an sich bekannte Reinigungs- bzw. Trennoperationen erfolgen, beispielsweise durch Destillation, Rektifikation, Pervaporation, Sublimation, Kristallisation, Thermodiffusion, Eindicken, Einengen, Eindampfen, Trocknen, Gefriertrocknen, Ausfrieren, Kondensation, Schmelzen, Elektrophorese, usw.

Weiterhin kann das vorstehend beschriebene Verfahren zur Restmonomerabtrennung (nachfolgend "Entgasungsverfahren") während der oder im Anschluss an die Herstellung von Polyoxymethylenhomo- oder -copolymeren (kurz: POM) erfolgen.

Erst wenn sich der Überdruckentgasung weitere Entgasungsstufen anschließen, können die gewünschten niedrigen Restmonomergehalte erreicht werden. Überraschenderweise werden besonders niedrige Rest-FA-Werte erreicht, wenn die vorentgaste Schmelze mit einem Restgehalt an flüchtigen Verbindungen von < 5000, vorzugsweise 3000, insbesondere 2000 ppm in einem Strangentgaser einer weiteren Entgasung unterzogen wird.

Überraschenderweise senkt die erfindungsgemäße Arbeitsweise den Rest-FA-Gehalt erheblich ab, obwohl zu erwarten gewesen wäre, dass die zusätzliche Scherung das POM schädigen sollte.

Bei der Herstellung von POM werden üblicherweise zunächst in einer sog. Monomeranlage geeignete Monomere hergestellt, z.B. Trioxan aus wässriger Formaldehydlösung, und/oder geeignete Monomere bevorratet. Danach werden die Monomere aus der Monomeranlage in einen Polymerisationsreaktor überführt und dort zum POM polymerisiert, wie es weiter oben bereits beschrieben wurde. Man erhält das beschriebene Roh-POM, aus dem die nicht umgesetzten Restmonomeren mit dem erfindungsgemäßen Entgasungsverfahren abgetrennt werden. Ebenso kann man bereits während der Polymerisation zum POM Restmonomere nach dem erfindungsgemäßen Entgasungsverfahren abtrennen, oder man führt diese erfindungsgemäße Restmonomerabtrennung sowohl während als auch nach der Polymerisation durch.

Weiterer Erfindungsgegenstand ist demnach auch ein Verfahren (nachfolgend "POM-Verfahren") zur Herstellung von Polyoxymethylenhomo- oder -copolymeren, dadurch gekennzeichnet, dass man zunächst in einer Monomeranlage geeignete Monomere herstellt oder bevorratet, dann die Monomere in einem Polymerisationsreaktor zu den genannten Polymeren polymerisiert, und während oder nach dieser Polymerisation die in den Polymeren enthaltenen Restmonomeren nach dem obigen Entgasungsverfahren entfernt. Natürlich kann man die Restmonomeren auch während und nach der Polymerisation entfernen.

Das erfindungsgemäße POM-Verfahren beinhaltet als einen Verfahrensschritt demnach das erfindungsgemäße Entgasungsvertahren.

Üblicherweise wird das erhalten Roh-POM in einem Extruder oder einer anderen geeigneten Mischvorrichtung mit üblichen Zusatzstoffen und Verarbeitungshilfsmitteln (Additiven) in den für diese Stoffe üblichen Mengen versehen. Solche Additive sind z.B. Gleit- oder Entformungsmittel, Farbmittel wie z.B. Pigmente oder Farbstoffe, Flammschutzmittel, Antioxidantien, Stabilisatoren gegen Lichteinwirkung, Formaldehydfänger, thermische Stabilisatoren wie Polyamide, Nukleierungsmittel, faser- und pulverförmige Füll- oder Verstärkungsmittel oder Antistatika, sowie andere Zusatzstoffe, oder deren Mischungen.

In einer bevorzugten Ausführungsform i) wird das POM bereits nach der Herstellung des Roh-POM, also noch vor der Zugabe der Additive auf dem Extruder, mit dem erfindungsgemäßen Entgasungsverfahren von den Restmonomeren befreit, z.B. indem man das den Polymerisationsreaktor verlassende Roh-POM in einen Entgasungstopf (Flashtopf) oder Entgasungsextruder fördert und dort die Restmonomere erfindungsgemäß abtrennt.

In einer anderen bevorzugten Ausführungsform ii) wird das POM erst bei der Zugabe der Additive auf dem Extruder bzw. der sonstigen Mischvorrichtung, mit dem erfindungsgemäßen Entgasungsverfahren von den Restmonomeren befreit. Dabei kann die Mischvorrichtung zur Zugabe der Additive identisch sein mit der Entgasungsvorrichtung; die im Entgasungsverfahren verwendet wird. Beispielsweise kann man auf demselben Extruder sowohl die Additive einmischen als auch das Entgasungsverfahren durchführen, also die Restmonomere abtrennen.

Insbesondere kann man das Roh-POM aus dem Polymerisationsreaktor zunächst in eine Entgasungsvorrichtung fördern und dort die Restmonomere erfindungsgemäß abtrennen, und/oder danach das POM auf einem Extruder mit den Additiven versehen und zugleich die Restmonomere erfindungsgemäß abtrennen. Die vorstehenden Ausführungsformen i) und ii) können also kombiniert werden.

Wie erwähnt, können die durch das Entgasungsverfahren entfernten Restmonomere erneut bei der POM-Herstellung als Einsatzstoffe verwendet werden, also im erfindungsgemäßen POM-Verfahren zurückgeführt (recycliert) werden. Dabei kann man den Zielpunkt dieser Rückführung der Produktionsanlage anpassen. Beispielsweise kann man die Restmonomere unmittelbar in den Polymerisationsreaktor oder in dessen Zulauf zurückführen, oder sie in die Monomeranlage zurückführen.

Folglich ist das POM-Verfahren bevorzugt dadurch gekennzeichnet, dass die entfernten Restmonomeren in den Polymerisationsreaktor oder in die Monomeranlage zurückgeführt werden. Natürlich kann man diese beiden Varianten auch kombinieren.

Erfindungsgegenstand sind schließlich auch die Polyoxymethylenhomo- oder -copolymere, erhältlich nach dem beschriebenen POM-Verfahren.

Das erfindungsgemäße Entgasungsverfahren ermöglicht eine Entgasung ohne störendes Aufschäumen des Polymers. Der Brüdenstrom muss vor der Wiederverwendung weder zwischenverdichtet noch vom Desaktivator befreit werden. Durch die geringe Verweilzeit in der Entgasung wird das Polymer geschont und Abbaureaktionen werden vermindert. Leckagen in der Entgasungsvorrichtung sind weit weniger problematisch als bei den Verfahren des Standes der Technik.

Der FA-Gehalt der entstehenden POM-Polymerisate ist deutlich verringert und die Farbeigenschaften verbessert. Insbesondere durch die Kombination von Strangentgaser mit den vorstehenden Schritten a) und b) ließen sich folgende Vorteile erzielen:
- sehr geringer Restgehalt von Formaldehyd im POM
- Abzug/Entgasung hochsiedender Fremdstoffe (z.B. org. Lösungsmittel) aus dem POM

### Vergleichsbeispiel

5 kg einer Mischung aus 96,495 Gew.-% flüssiges Trioxan, 3,5 Gew.% Dioxolan und 0,005 Gew.-% Methylal wurden auf 160°C erwärmt und in einen Rohrreaktor mit statischen Mischern gepumpt. Durch Zugabe von 0,5 ppmw Perchlorsäure (als 0,01 gew.%ige Lösung in 1,4-Dioxan) startete man die Polymerisation, der Druck im Reaktor betrug 20 bar.

Nach einer Verweilzeit von 2 min wurde in der Abbruchzone des Reaktors Triacetondiamin als Abbruchmittel (als 0,1 gew.%ige Lösung in 1,3-Dioxolan) eindosiert und über einen statischen Mischer eingemischt.

Nach einer weiteren Verweilzeit von 3 min wurde das Produkt (Roh-POM) Ober ein Regelventil in einen Entgasungstopf auf einen Druck von 3 bar entspannt, wodurch die flüchtigen Komponenten von der Polymerschmelze abgetrennt wurden. In der Polymerschmelze verblieben Reste an Trioxan und Formaldehyd.

Das entgaste POM wurde auf einem Extruder mit Formaldehydfänger (Zeolith Purmol 4ST der Firma Zeochem AG), Antioxidans (Irganox^{®} 245 der Firma Ciba Spezialitätenchemie GmbH) und weiteren Additiven versehen (Polyamid C 31, Loxiol^{®} P 1206 der Firma Cognis), indem ein Masterbatch (500 g POM mit den entsprechenden Additiven) eingemischt wurde. Als Extruder verwendete man einen Zweischneckenextruder bei einer Verweilzeit von 50 sec. Der Extruder diente auch zur weiteren Entgasung des POM, indem dieses bei der Extrusion einem Unterdruck von 250 mbar ausgesetzt wurde. Nach der Extrusion wurde das Polymer abgekühlt und granuliert.

### Erfindungsgemäßes Beispiel

Die Vorgehensweise entsprach dem Vergleichsbeispiel, wobei nach der Extrusion das Polymer nicht abgekühlt und granuliert, sondern in einen Strangentgaser überführt wurde.

Der Strangentgaser wies sieben Löcher mit einem Durchmesser von jeweils 5 mm auf, aus denen sich Stränge über eine Länge von 1,6 m ausbildeten, die anschließend in einem Schmelzesee zusammenliefen und aus dem Strangentgaser ausgetragen wurden. Der Strangentgaser wurde bei einer Temperatur von 185°C betrieben, der Druck betrug 30 mbar, die Verweilzeit betrug 30 sec.

Nach dem Austritt aus dem Strangentgaser wurde das Polymer abgekühlt und granuliert.

An den Granulaten wurde der Rest-Formaldehydgehalt nach der Sulfitmethode bestimmt:

Im 250 ml-Schliff-Erlenmeyer wurden 70 ml VE-Wasser vorgelegt und 50 g der zu untersuchenden Probe hinzugewogen. Danach versah man den Erlenmeyer mit einem sauberen Rücktlusskühler, und erhitzte auf vorgeheiztem Magnetrührer unter Rühren schnell zum Sieden. 50 Minuten später wurde rasch abgekühlt und auf dem Metrohm-Titroprozessor 682 unter User Methode 1 und 2 der Formaldehydgehalt bestimmt.

Mit n/10 Natronlauge (5 ml) und n/10 Schwefelsäure wurde genau auf pH 9,4 eingestellt, 5 ml Natriumsulfitlösung hinzugegeben und nach kurzer Reaktionszeit mit n/10 Schwefelsäure auf pH 9,4 zurücktitriert.

Die Berechnung des Restformaldehydgehalts erfolgte durch Masse FA[mg] = Verbrauch [H₂SO₄) x 2 x Konzentration (H₂SO₄) x Masse (Formaldehyd) FA-Gehalt [%] = Masse FA [mg] Einwaage [g, POM-Granulat] x (1000000/1000) (Natriumsulfitlösung = 136 g Na₂SO₃ + 1,000 g VE-Wasser)
FA = Formaldehyd

Die Ergebnisse der Messungen sind der Tabelle zu entnehmen.

| | |
|---|---|
| Vergleichsbeispiel | 239 ppm Rest-FA |
| Erfindungsbeispiel | 96 ppm Rest-FA |

## Patentansprüche

1. Verfahren zur Entfernung von nicht umgesetzten Restmonomeren aus Polyoxymethylenen, **dadurch gekennzeichnet, dass** ein Entgasungsschritt in einem Strangentgaser durchgeführt wird.

2. Verfahren nach Anspruch 1, **dadurch gekennzeichnet, dass** der Druck im Strangentgaser 0,1 bis 250 mbar beträgt.

3. Verfahren nach den Ansprüchen 1 oder 2, **dadurch gekennzeichnet, dass** die Temperatur der Schmelze bei Eintritt in den Strangentgaser 155 bis 270°C beträgt.

4. Verfahren nach den Ansprüchen 1 bis 3, **dadurch gekennzeichnet, dass** die Verweilzeit 2 Sek. bis 60 Min. beträgt.

5. Verfahren nach den Ansprüchen 1 bis 4, **dadurch gekennzeichnet, dass** man
a) das Polymer bei einem Druck von 10 bis 100 bar auf eine Temperatur von 165 bis 270°C bringt, wobei eine Schmelze entsteht,
b) die Schmelze bei einem Druck von 1 mbar bis 9 bar und einer Temperatur von 160 bis 240°C in mindestens einer Entgasungsvorrichtung entgast, und
c) danach in einem Stangentgaser weitere Restmonomere entfernt.

6. Verfahren nach den Ansprüchen 1 bis 5, **dadurch gekennzeichnet, dass** in Schritt a) der Druck 15 bis 60 bar und die Temperatur 170 bis 240°C beträgt.

7. Verfahren nach den Ansprüchen 1 bis 6, **dadurch gekennzeichnet, dass** in Schritt b) der Druck 5 mbar bis 8 bar und die Temperatur 168 bis 220°C beträgt.

8. Verfahren nach den Ansprüchen 1 bis 7, **dadurch gekennzeichnet, dass** die Entgasung in Schritt b) mindestens zweistufig erfolgt.

9. Verfahren nach Anspruch 8, **dadurch gekennzeichnet, dass** bei der zweistufigen Entgasung b) in der ersten Stufe der Druck 2 bis 18 bar und die Temperatur 160 bis 240°C, und in der zweiten Stufe der Druck 1 mbar bis 1 bar und die Temperatur 160 bis 240°C beträgt.

10. Verfahren nach den Ansprüchen 1 bis 9, **dadurch gekennzeichnet, dass** in Schritt b) als Entgasungsvorrichtung ein Entgasungstopf oder ein Entgasungsextruder verwendet wird.

11. Verfahren zur Herstellung von Polyoxymethylenhomo- oder -copolymeren, **dadurch gekennzeichnet, dass** man zunächst in einer Monomeranlage geeignete Monomere herstellt oder bevorratet, dann die Monomere in einem Polymerisationsreaktor zu den genannten Polymeren polymerisiert, und während oder nach dieser Polymerisation die in den Polymeren enthaltenen Restmonomeren nach dem Verfahren gemäß den Ansprüchen 1 bis 11 entfernt.

12. Verfahren nach Anspruch 11, **dadurch gekennzeichnet, dass** die entfernten Restmonomeren in den Polymerisationsreaktor oder in die Monomeranlage zurückgeführt werden.

13. Polyoxymethylenhomo- oder -copolymere, erhältlich nach dem Verfahren gemäß den Ansprüchen 11 oder 12.

## Claims

1. A process for removing unconverted residual monomers from polyoxymethylenes, wherein a devolatilization step is carried out in an extrudate devolatilizer.

2. The process according to claim 1, wherein the pressure in the extrudate devolatilizer is from 0.1 to 250 mbar.

3. The process according to either of claims 1 and 2, wherein the temperature of the melt on entering the extrudate devolatilizer is from 155 to 270°C.

4. The process according to any of claims 1 to 3, wherein the residence time is from 2 sec to 60 min.

5. The process according to any of claims 1 to 4, wherein
a) the polymer is brought to a temperature of from 165 to 270°C at a pressure of from 10 to 100 bar, a melt forming,
b) the melt is devolatilized at a pressure of from 1 mbar to 9 bar and a temperature of from 160 to 240°C in at least one devolatilizing apparatus, and
c) further residual monomers are then removed in an extrudate devolatilizer.

6. The process according to any of claims 1 to 5, wherein, in step a), the pressure is from 15 to 60 bar and the temperature is from 170 to 240°C.

7. The process according to any of claims 1 to 6, wherein, in step b), the pressure is from 5 mbar to 8 bar and the temperature is from 168 to 220°C.

8. The process according to any of claims 1 to 7, wherein the devolatilization in step b) is effected in two or more stages.

9. The process according to claim 8, wherein, in the two-stage devolatilization b), the pressure is from 2 to 18 bar and the temperature from 160 to 240°C in the first stage, and the pressure is from 1 mbar to 1 bar and the temperature from 160 to 240°C in the second stage.

10. The process according to any of claims 1 to 9, wherein, in step b), a devolatilization vessel or devolatilizing extruder is used as the devolatilizing apparatus.

11. A process for the preparation of polyoxymethylene homo- or copolymers, wherein first suitable monomers are prepared or stored in a monomer unit, the monomers are then polymerized in a polymerization reactor to give said polymers, and the residual monomers present in the polymers are removed, during or after this polymerization, by the process according to any of claims 1 to 11.

12. The process according to claim 11, wherein the residual monomers removed are recycled to the polymerization reactor or to the monomer unit.

13. A polyoxymethylene homo- or copolymer, obtainable by the process according to either of claims 11 and 12.

## Revendications

1. Procédé en vue de l'élimination de monomères résiduels n'ayant pas réagi de polyoxyméthylènes, **caractérisé en ce que** l'on effectue une étape de dégazage dans un dégazéificateur à boyaux.

2. Procédé selon la revendication 1, **caractérisé en ce que** la pression dans le dégazéificateur à boyaux est de 0,1 à 250 mbars.

3. Procédé selon la revendication 1 ou 2, **caractérisé en ce que** la température de la masse en fusion à l'entrée du dégazéificateur à boyaux est de 155 à 270°C.

4. Procédé selon les revendications 1 à 3, **caractérisé en ce que** le temps de séjour est de 2 secondes à 60 minutes.

5. Procédé selon les revendications 1 à 4, **caractérisé en ce que**
a) l'on amène le polymère à une pression de 10 à 100 bars à une température de 165 à 270°C, une masse en fusion se formant,
b) l'on procède au dégazage de la masse en fusion à une pression de 1 mbar à 9 bars et à une température de 160 à 240°C dans au moins un dégazéificateur, et
c) l'on élimine ensuite les monomères résiduels supplémentaires dans un dégazéificateur à boyaux.

6. Procédé selon les revendications 1 à 5, **caractérisé en ce que**, dans l'étape a), la pression est de 15 à 60 bars et la température est de 170 à 240°C.

7. Procédé selon les revendications 1 à 6, **caractérisé en ce que**, dans l'étape b), la pression est de 5 mbars à 8 bars et la température est de 168 à 220°C.

8. Procédé selon les revendications 1 à 7, **caractérisé en ce que** le dégazage dans l'étape b) se fait au moins en deux étapes.

9. Procédé selon la revendication 8, **caractérisé en ce que**, lors du dégazage en 2 étapes b), dans la première étape, la pression est de 2 à 18 bars et la température est de 160 à 240°C et, dans la seconde étape, la pression est de 1 mbar à 1 bar et la température est de 160 à 240°C.

10. Procédé selon les revendications 1 à 9, **caractérisé en ce que**, dans l'étape b), l'on utilise, en tant que dégazéificateur, une cuve de dégazage ou une extrudeuse de dégazage.

11. Procédé en vue de la fabrication d'homopolymères ou de copolymères de polyoxyméthylènes, **caractérisé en ce que** l'on fabrique ou l'on stocke, dans une installation de monomères, les monomères appropriés, **en ce que** l'on polymérise alors les monomères dans un réacteur de polymérisation pour former les polymères cités, et **en ce que**, pendant ou après cette polymérisation, l'on élimine les monomères résiduels contenus dans les polymères, conformément au procédé selon les revendications 1 à 11.

12. Procédé selon la revendication 11, **caractérisé en ce que** les monomères résiduels éliminés sont reconduits dans le réacteur de polymérisation ou dans l'installation de monomères.

13. Homopolymères ou copolymères de polyoxyméthylènes, disponibles conformément au procédé selon les revendications 11 ou 12.
